# EUROPÄISCHE PATENTSCHRIFT

(11) **EP 1 820 308 B1**
(45) Veröffentlichungstag und Bekanntmachung des Hinweises auf die Patenterteilung: **12.08.2009**
(21) Anmeldenummer: 05817094.5
(22) Anmeldetag: 23.11.2005
(51) Int. Cl.: H04L 12/56

(54) **VERFAHREN UND VORRICHTUNG ZUR AUTOMATISCHEN NEUEINSTELLUNG VON GRENZEN FÜR ZUGANGSKONTROLLEN ZUR BESCHRÄNKUNG DES VERKEHRS IN EINEM KOMMUNIKATIONSNETZ**
METHOD AND DEVICE FOR THE AUTOMATIC READJUSTMENT OF LIMITS FOR ACCESS CONTROLS USED TO RESTRICT TRAFFIC IN A COMMUNICATION NETWORK
PROCEDE ET DISPOSITIF DE REDEFINITION AUTOMATIQUE DE LIMITES POUR DES CONTROLES D'ACCES EN VUE DE RESTREINDRE LE TRAFIC DANS UN RESEAU DE COMMUNICATION

(30) Priorität: 29.11.2004 DE 102004057496
(43) Veröffentlichungstag der Anmeldung: 22.08.2007
(73) Patentinhaber: Nokia Siemens Networks GmbH & Co. KG, 81541 München (DE)
(72) Erfinder: CHARZINSKI, Joachim, 81825 München (DE); SCHRODI, Karl, 82538 Geretsried (DE); WINKLER, Christian, 80339 München (DE); WALTER, Uwe, 76356 Weingarten (DE)
(86) Internationale Anmeldenummer: PCT/EP2005/056175
(87) Internationale Veröffentlichungsnummer: WO 2006/058857

(56) Entgegenhaltungen:
- EP-A- 1 005 195
- WO-A-20/04002078
- US-B1- 6 262 976

## Beschreibung

Die Erfindung betrifft ein Verfahren und ein Konfigurierungssystem zur automatischen Neueinstellung von Grenzen für Zugangskontrollen zur Beschränkung des Verkehrs in einem mit Links gebildeten Kommunikationsnetz, welches Kontrollinstanzen zur Durchführung der Zugangsbeschränkungen aufweist.

Eine der derzeit wichtigsten Entwicklungen auf dem Gebiet der Netze ist die Weiterentwicklung von Datennetzen für die Übertragung von Echtzeitverkehr, d. h. Sprache, Videoinformationen und Audioinformationen. Um ein Datennetz echtzeitfähig zu machen, müssen Mechanismen bereitgestellt werden, die die Einhaltung von so genannten Dienstgütemerkmalen, wie z. B. die Übertragungsdauer, den so genannten Jitter und die Paketverlustrate gewährleisten. In einem echtzeitfähigen Netz muss verhindert werden, dass Situationen auftreten, in denen zugesagte Dienstgütemerkmale nicht mehr gewährleistet werden können. Herkömmliche Datennetze weisen das Handicap auf, dass Überlastsituationen auftreten können, die zu langen Paketlaufzeiten oder sogar Paketverlusten führen können. Daher wird bei echtzeitfähigen Datennetzen oder Paketnetzen - herkömmliche Datennetze basieren in der Regel auf der Übertragung von IP Paketen, wie z.B. das Internet - mit Verkehrsbeschränkung zumindest für Echtzeitverkehr gearbeitet, um dem Echtzeitverkehr die erforderliche Dienstgüte zur Verfügung stellen zu können. Verkehrsbeschränkung basiert meist auf Zugangskontrollen am Netzrand, im Zuge derer zu übertragender Verkehr angemeldet und je nach verfügbarer Bandbreite zugelassen oder abgewiesen wird.

Bei der Einrichtung von Zugangskontrollen soll einerseits eine dienstgerechte Dienstgüte garantiert werden, andererseits hat der Netzbetreiber das Interesse, möglichst viel Verkehr zu übertragen, um so möglichst hohe Einkünfte zu erzielen. Bei der Wahl der Grenzen muss daher ein Kompromiss gefunden werden, der eine Übertragung von möglichst viel Verkehr erlaubt, ohne dass dadurch die Dienstgüte beeinträchtigt würde.

In Datennetzen hat der Betreiber zusätzlich die Möglichkeit, durch Festsetzen von so genannten Linkgewichten die Übertragung bzw. Verteilung von Verkehr in seinem Netz zu optimieren. Die Festsetzung von Grenzen für die Zugangskontrolle und Linkgewichten stellt in größeren Netzen einen beträchtlichen Aufwand dar. Wenn zusätzlich noch betreiberseitig Parameter vorgebbar sein sollen, um beispielsweise wirtschaftlichen Vereinbarungen nachzukommen und die Einstellungen bei veränderten Verkehrsbedingungen nachführbar sein sollen, ist der Betreiber mit Konfigurieren von beträchtlichem Aufwand und beträchtlicher Komplexität konfrontiert.

EP A 1 005 195 offenbart ein Verfahren zur Einstellung von Linkgewichten in einem mit Links gebildeten Kommunikationsnetz, derart, dass bei der Netzwerkinitialisierung eine Verkehrsmatrix einmalig gebildet wird, und dass diese Verkehrsmatrix als Grundlage für die einmalige Berechnung der Linkgewichte im gesamten Netz verwendet wird.

WO2004/002078 offenbart ein Verfahren für die dynamische Anpassung von Linkgewichten auf Basis lokaler, link-bezogener Information.

Die Erfindung hat zur Aufgabe, die Bestimmung und Einstellung von Netzparametern in einem mit Links gebildeten Kommunikationsnetz unter Einbeziehung von Zugangskontrollen zu optimieren.

Die Aufgabe wird durch die Gegenstände der unabhängigen Ansprüche gelöst.

Es wird vorgeschlagen, die Grenzen für Zugangskontrollen zur Beschränkung des Verkehrs in einem mit Links gebildeten Kommunikationsnetz automatisch einzustellen oder nachzuführen. Im Folgenden wird davon ausgegangen, dass in diesem Kommunikationsnetz Kontrollinstanzen vorhanden sind, mittels derer Zugangskontrollen durchgeführt werden können. Zur automatischen Konfigurierung von Grenzen wird ein Konfigurierungssystem im Netz angeordnet. Die Neueinstellung von Grenzen (ein Teil der für die Zugangskontrolle verwendeten Grenzen oder alle Grenzen) für Zugangskontrollen wird durch ein Ereignis ausgelöst. In dem Konfigurierungssystem des Kommunikationsnetzes werden die Verkehrsmatrix und die Linkgewichte des Netzes erfasst. Diese können als Reaktion auf das Auslösen der Neueinstellung ermittelt und dann erfasst werden oder auch regelmäßig bzw. periodisch neu ermittelt und an das Konfigurierungssystem geliefert werden. Auch ist möglich, dass Netzparameter durch den Betreiber ein- bzw. vorgegeben werden. Z.B. könnte der Betreiber eine neue Verkehrsmatrix konfigurieren und dieses Ereignis eine Neueinstellung auslösen. Mittels der Verkehrsmatrix wird eine Neuberechnung von Linkgewichten vorgenommen, und auf Grundlage der neu berechneten Linkgewichte werden neue Grenzen für die Zugangskontrollen ermittelt. Diese Grenzen werden jeweils an zugehörige Kontrollinstanzen zur Durchführung der Zugangsbeschränkung übermittelt. Die übermittelten Grenzen werden dann für die Zugangskontrollen mittels der berechneten Grenzen aktiviert. Eine Aktivierung kann beispielsweise mittels einer Aktivierungsnachricht durch das Konfigurierungssystem vorgenommen werden. So werden im Rahmen einer Weiterbildung zunächst die Grenzen aktiviert, die mit einer Absenkung der korrespondierenden, für Reservierungen zur Verfügung stehenden Bandbreite einhergeht. Wenn diese Grenzen dann eingehalten werden, so wird dies an das Konfigurierungssystem signalisiert, welches dann die anderen Grenzen aktiviert. Zusätzlich zu den neu ermittelten Grenzen können ebenfalls die neu berechneten Linkgewichte an Router des Netzes übermittelt und dort für das Routing innerhalb des Netzes aktiviert werden.

Die Erfindung erlaubt die automatische Berechnung und Konfiguration von Betriebsparametern, wie z.B. Grenzen für Zugangskontrollen und Linkgewichte. Diese automatische Berechnungskonfiguration von Betriebsparametern erspart dem Betreiber die Benutzung externer Optimierungsprogramme, die Konversion der Parameter zwischen verschiedenen Formaten und das manuelle Einspielen der Parameter und senkt damit die Kosten für die Einführung von Zugangskontrollen für Verkehrsbeschränkung oder Traffic Engineering in Paketnetzen. Die automatische Nachführung der Parameter bringt darüber hinaus den Vorteil, dass der Netzbetreiber sich im Netzkontrollzentrum nicht um kleinere und häufigere Ausfälle kümmern muss.

Ein Ereignis zur Auslösung der Neueinstellung von Grenzen kann beispielsweise ein Ausfall eines oder mehrerer Netzelemente (Links bzw. Knoten) bzw. eine Änderung der Topologie des Netzes, eine neue Eingabe von Netzparametern (z.B. Rahmen von neuen Betreibervorgaben) oder das Eintreffen eines Zeitpunkts für den im Zuge einer regelmäßigen Nachführung eine Neuberechnung vorgesehen ist, gegeben sein. Falls das Ereignis in dem Ausfall zumindest eines Netzelementes besteht, kann man vorsehen, dass eine Neuberechnung der Grenzen erst nach Ablauf einer Zeitspanne vorgenommen wird. Dies hat den Hintergrund, dass in derzeitigen Netzen häufig kurzfristige Ausfälle vorkommen, bei denen eine Reaktion auf der Zeitskala einer Neueinstellung der Grenzen nicht erforderlich ist. Es kann auch nach dem Ausfall eines Netzes das Netz für neuen Verkehr gesperrt werden, bis neue Grenzen ermittelt und für die Zugangskontrollen aktiviert wurden. Alternativ können Grenzen von vorneherein so festgesetzt werden, dass eine redundante Bandbreite für Ausfallsituationen vorgesehen ist, so dass eine Störung bzw. ein Ausfall den regelgemäßen Betrieb nicht beeinträchtigt. In diesem Fall ist auch eine Neuberechnung von Grenzen sinnvoll, wobei dann diese Neuberechnung derart erfolgt, dass wiederum redundante Bandbreite für das Abfangen von Störfällen vorhanden ist.

Das erfindungsgemäße Konfigurierungssystem ist für die Übermittelung von neu ermittelten Grenzen für Zugangskontrollen an Kontrollinstanzen ausgestaltet. Es kann zudem zur Aktivierung der übermittelten Grenzen bei den Kontrollinstanzen angepasst sein. Falls die neu ermittelten Linkgewichte an Router zu übermitteln sind und dort aktiviert werden sollen, kann das Konfigurierungssystem auch für diese Zwecke ausgebildet sein.

Das Konfigurierungssystem kann zentral oder verteilt realisiert sein. Eine zentrale Realisierung wäre beispielsweise auf einem Kontrollserver im Netzmanagementsystem oder in einer Dienstesteuerung. Die zentralen Realisierungen wären beispielsweise in Routern oder in Zugangskontrollelementen; im letzten Fall wäre das Konfigurierungssystem auf derselben Hardware-Plattform wie die zugehörige Kontrollinstanz implementiert. Der Austausch von Information geschähe dann über interne Schnittstellen.

Die Erfindung wird im Folgenden im Rahmen eines Ausführungsbeispiels an Hand von Figuren näher erläutert. Dabei wird der Begriff Budget für die durch die Festsetzung von Grenzen für die Zugangskontrollen vorhandene Bandbreite für den Transport von Verkehr verwendet.

### Es zeigen

- Figur 1: ein erfindungsgemäßes Konfigurierungssystem mit Eingangs- und Ausgangsgrößen.
- Figur 2: Darstellung einer Reaktion entsprechend dem erfindungsgemäßen Vorgehen auf den Ausfall eines Links.

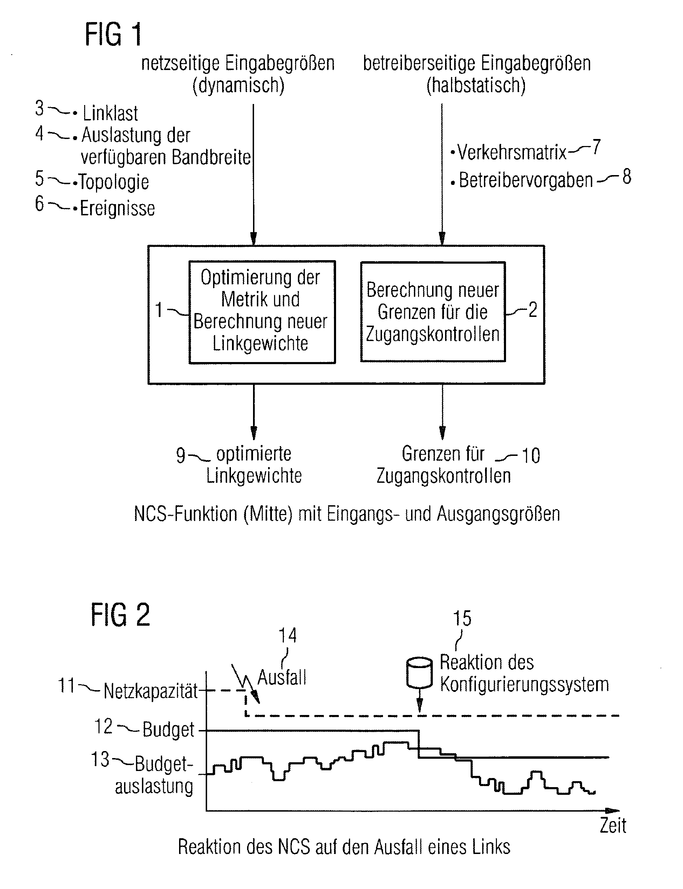

Figur 1 zeigt schematisch ein erfindungsgemäßes Konfigurierungssystem. In diesem System sind Module für folgende Funktionen angeordnet:
1: Optimierung der Metrik und Berechnung neuer Linkgewichte (Link Metric Optimisation).
2: Berechnung neuer Grenzen für die Zugangskontrollen (NAC Budget Computation).

Eingabegrößen des Systems sind netzseitig die Last der Links (link load) 3, die Auslastung der verfügbaren Bandbreite bzw. die bei den einzelnen Grenzen noch verfügbare Bandbreite (budget usage) 4, die Topologie des Netzes (topology) 5 und Ereignisse (events) 6, wie z. B. Netzausfälle, welche zu einer Neuberechnung von Grenzen führen können. Auf Seite des Betreibers ist es möglich, eine Verkehrsmatrix (traffic matrix) 7 vorzugeben. Es ist aber auch denkbar, eine Verkehrsmatrix durch automatisierte Messungen in regelmäßigen Abständen zu ermitteln und an das Konfigurierungssystem weiterzugeben. Daneben können vom Betreiber Regeln oder Randbedingungen (operator policies) 8 vorgegeben werden, die durch wirtschaftliche Überlegungen bedingt sind, z. B. die Bevorzugung von Verkehr bestimmter Kunden oder zusätzliche Priorisierungen. So kann der Betreiber z.B. eine Schwelle für die Anzahl der Linkausfälle konfigurieren, bei denen noch präventiv die Budgets so berechnet werden sollen, dass bei weiteren Ausfällen die QoS-Zusagen (QoS: quality of service) bzw. die zugesagte Dienstgüte an die zugelassenen Reservierungen weiterhin eingehalten werden. Jede präventive Reduktion der Budgets erhöht naturgemäß die Blockierungshäufigkeit und verringert damit die Einnahmen des Netzbetreibers, während sie andererseits eine Sicherheit gegen Verletzung der QoS-Zusagen bietet.

Als Ausgangsgrößen liefert das Konfigurierungssystem optimierte Linkgewichte (optimized link metrics) 9 und die Grenzen (budgets with resilience) 10 für die Zugangskontrollen NAC (NAC: network access control), welche so festgesetzt werden können, dass für den Ausfall von Netzelementen redundante Bandbreite zum Abfangen des Ausfalls gegeben ist.

Für die Aktivierung von Grenzen bzw. Budgets kann ein weiteres Protokoll eingesetzt werden, um eine konsistente Budgetanpassung zu erreichen. Zunächst werden von den Budgetänderungen nur die Budgetverringerungen aktiviert. Die Zugangskontrollinstanzen (NACs) geben dem Konfigurierungssystem (z.B. Network Control Server NCS) bescheid, sobald jeweils das reservierte Budget sich im Rahmen des neu vorgegebenen Budgets bewegt. Wenn alle NACs für alle geänderten Budgets dem NCS signalisiert haben, dass die Budgets jetzt eingehalten werden, kann der NCS die restlichen (zu erhöhenden) Budgets erhöhen.

Während des Netzbetriebes werden Link- und Budgetauslastungen sowie Topologieänderungen (Ausfälle, Wiederinbetriebnahmen, Netzerweiterungen) und sonstige Ereignisse beobachtet und ggf. neue Budgets bzw. Link-Kostenmetriken berechnet. Im Folgenden wird auf die Reaktion auf Ausfälle näher eingegangen. Die Verarbeitung der Auslastungs-Messdaten ist Gegenstand einer separaten Erfindungsmeldung.

Fig. 2 zeigt schematisch den Verlauf der verfügbaren Netzkapazität (capacity) 11, des verfügbaren Budgets (budget) 12 und der Auslastung des Budgets über der Zeit (budget utilization) 13. Die Budgets 12 sind so berechnet, dass der zugelassene Verkehr auch nach dem Ausfall (failure) 14 eines (beliebigen) Links im Netz noch mit den gegebenen QoS-Zusagen bzw. mit der zugesagten Dienstgüte transportiert werden kann. Wenn nun tatsächlich ein solcher Ausfall 14 eintritt (symbolisiert durch den Pfeil in Fig. 2), dann muss außer der Wiederherstellung der Erreichbarkeit im Netz durch eine schnelle Fehlererkennung und ein entsprechendes schnelles Re-Routing nichts weiter geschehen.

Um allerdings auch bei weiteren Linkausfällen wieder den Erhalt der Dienstgüte (QoS) sicherstellen zu können, wird das Konfigurierungssystem (NCS: network control server) 15 dennoch die Budgets auf die jetzt gültige neue Topologie anpassen (NCS reaction). Fig. 2 zeigt, dass nach dieser Anpassung zunächst mehr Budget 12 reserviert sein kann als tatsächlich vorhanden ist. Während dies der Fall ist, werden auf den betroffenen Budgets alle neuen Reservierungs-Anfragen blockiert. Durch die natürliche Fluktuation der Reservierungen wird dieser transiente bzw. vorübergehende Zustand nach einiger Zeit wieder verlassen, wenn genügend Reservierungen beendet wurden. Von diesem Zeitpunkt an arbeitet die Ressourcenverwaltung wieder normal, und es werden neue Reservierungen zugelassen, falls sie noch in das jeweils betroffene Budget passen. Die Blockierungshäufigkeit, d.h. die durchschnittliche Rate für Abweisungen von Reservierungsanfragen, ist mit den reduzierten Budgets natürlich etwas größer als vorher, aber das ist die natürliche Konsequenz des Fehlens der ausgefallenen Netzressourcen.

Wenn ein einmal ausgefallener Link wieder in Betrieb geht, können die Budgets entsprechend wieder neu berechnet werden und die neuen Werte können wieder in dem Konfigurierungssystem bzw. den NAC-Komponenten konfiguriert werden.

## Patentansprüche

1. Verfahren zur automatischen Neueinstellung von Grenzen für Zugangskontrollen zur Beschränkung des Verkehrs in einem mit Links gebildeten Kommunikationsnetz, welches Kontrollinstanzen zur Durchführung der Zugangskontrollen aufweist, bei dem
- durch ein Ereignis die Neueinstellung von Grenzen für Zugangskontrollen ausgelöst wird,
- in einem Konfigurierungssystem des Kommunikationsnetzes eine Verkehrsmatrix des Netzes erfasst wird,
- durch das Konfigurierungssystem mittels der Verkehrsmatrix eine Neuberechnung von Linkgewichten vorgenommen wird,
- auf Grundlage der neu berechneten Linkgewichte neue Grenzen für die Zugangskontrollen ermittelt werden,
- die ermittelten Grenzen jeweils an zugehörige Kontrollinstanzen zur Durchführung der Zugangsbeschränkung übermittelt werden, und
- die übermittelten Grenzen für Zugangskontrollen mittels dieser Grenzen aktiviert werden.

2. Verfahren nach Anspruch 1,
**dadurch gekennzeichnet, dass**
die neu berechneten Linkgewichte an Router des Netzes übermittelt und dort für das Routing innerhalb des Netzes aktiviert werden.

3. Verfahren nach Anspruch 1 oder 2,
**dadurch gekennzeichnet, dass**
- das Ereignis durch den Ausfall einer oder mehrerer Netzelemente, durch eine Neueingabe von Netzparametern oder einem im Zuge einer regelmäßigen Nachführung vorgegebenen Zeitpunkt gegeben ist.

4. Verfahren nach einem der vorhergehenden Ansprüche,
**dadurch gekennzeichnet, dass**
- das Ereignis in dem Ausfall zumindest eines Netzelements besteht, und
- die Neueinstellung der Grenzen erst nach Ablauf einer Zeitspanne vorgenommen wird, wenn nach Ablauf der Zeitspanne der Ausfall noch Bestand hat.

5. Verfahren nach einem der vorhergehenden Ansprüche,
**dadurch gekennzeichnet, dass**
- das Ereignis in dem Ausfall zumindest eines Netzelements besteht, und
- kein neuer Verkehr zugelassen wird, bis neue Grenzen ermittelt und für die Zugangskontrollen aktiviert wurden.

6. Verfahren nach einem der vorhergehenden Ansprüche,
**dadurch gekennzeichnet, dass**
- zunächst die Aktivierung neuer Grenzen erfolgt, welche zu einer Verringerung der zur Verfügung stehenden Bandbreite für die mittels der Grenzen durchgeführten Zugangskontrollen führen,
- die Einhaltung dieser Grenzen an das Konfigurierungssystem signalisiert wird, und
- daraufhin die übrigen Grenzen aktiviert werden.

7. Konfigurierungssystem zur Durchführung eines Verfahrens nach einem der Ansprüche 1 bis 6.

8. Konfigurierungssystem nach Anspruch 7,
**dadurch gekennzeichnet, dass**
das Konfigurierungssystem für die Übermittlung von neu ermittelten Linkgewichten an Router ausgestaltet ist.

9. Konfigurierungssystem nach Anspruch 8,
**dadurch gekennzeichnet, dass**
das Konfigurierungssystem für die Aktivierung der neu ermittelten Linkgewichte ausgestaltet ist.

10. Konfigurierungssystem nach einem der Ansprüche 7 bis 9,
**dadurch gekennzeichnet, dass**
das Konfigurierungssystem auf einem Kontrollserver, im Netzmanagement-System, in einer Dienstesteuerung, in Routern oder in Zugangskontrollelementen realisiert ist.

## Claims

1. Method for the automatic readjustment of limits for access controls for restricting the traffic in a communication network formed by means of links which has control entities for performing the access controls, in which
- an event triggers the readjustment of limits for access controls,
- a traffic matrix of the network is captured in a configuration system of the communication network,
- the configuration system uses the traffic matrix to recalculate link weights,
- the freshly calculated link weights are taken as a basis for ascertaining new limits for the access controls,
- the ascertained limits are respectively transmitted to associated control entities for performing the access restriction, and
- the transmitted limits for access controls are activated by means of these limits.

2. Method according to Claim 1,
**characterized in that**
the freshly calculated link weights are transmitted to routers in the network, where they are activated for the routing within the network.

3. Method according to Claim 1 or 2,
**characterized in that**
- the event is the failure of one or more network elements, fresh input of network parameters or a time prescribed in the course of regular tracking.

4. Method according to one of the preceding claims,
**characterized in that**
- the event consists in the failure of at least one network element, and
- the limits are readjusted after a time period has elapsed only if the failure lasts after the time period has elapsed.

5. Method according to one of the preceding claims,
**characterized in that**
- the event comprises the failure of at least one network element, and
- no new traffic is admitted until new limits have been ascertained and have been activated for the access controls.

6. Method according to one of the preceding claims,
**characterized in that**
- first of all new limits are activated which result in a reduction in the available bandwidth for the access controls performed by means of the limits,
- the compliance with these limits is signalled to the configuration system, and
- the remaining limits are then activated.

7. Configuration system for carrying out a method according to one of Claims 1 to 6.

8. Configuration system according to Claim 7,
**characterized in that**
the configuration system is designed for the transmission of freshly ascertained link weights to routers.

9. Configuration system according to Claim 8,
**characterized in that**
the configuration system is designed for the activation of the freshly ascertained link weights.

10. Configuration system according to one of Claims 7 to 9,
**characterized in that**
the configuration system is implemented on a control server, in the network management system, in a service controller, in routers or in access control elements.

## Revendications

1. Procédé de redéfinition automatique de limites pour des contrôles d'accès en vue de restreindre le trafic dans un réseau de communication constitué avec des liens et qui comprend des instances de contrôle pour effectuer les contrôles d'accès, dans lequel
- la redéfinition de limites pour des contrôles d'accès est déclenchée par un événement,
- une matrice de trafic du réseau est déterminée dans un système de configuration du réseau de communication,
- les poids de lien sont recalculés par le système de configuration au moyen de la matrice de trafic,
- de nouvelles limites pour les contrôles d'accès sont déterminées sur la base des poids de lien recalculés,
- les limites déterminées sont transmises à des instances de contrôle associées en vue d'effectuer la restriction d'accès, et
- les limites transmises pour des contrôles d'accès sont activées au moyen de ces limites.

2. Procédé selon la revendication 1,
**caractérisé en ce que**
les poids de lien recalculés sont transmis à des routeurs du réseau où ils sont activés pour le routage au sein du réseau.

3. Procédé selon la revendication 1 ou 2,
**caractérisé en ce que**
- l'événement est donné par la défaillance d'un ou plusieurs éléments de réseau, par une réintroduction de paramètres de réseau ou d'un instant prédéterminé au cours d'un réajustement régulier.

4. Procédé selon l'une des revendications précédentes,
**caractérisé en ce que**
- l'événement consiste en la défaillance d'au moins un élément de réseau, et
- la redéfinition des limites n'est opérée qu'à l'expiration d'un laps de temps si à l'expiration dudit laps de temps la défaillance persiste.

5. Procédé selon l'une des revendications précédentes,
**caractérisé en ce que**
- l'événement consiste en la défaillance d'au moins un élément de réseau, et
- aucun nouveau trafic n'est admis jusqu'à ce que de nouvelles limites aient été déterminées et activées pour les contrôles d'accès.

6. Procédé selon l'une des revendications précédentes,
**caractérisé en ce que**
- il est procédé d'abord à l'activation de nouvelles limites, lesquelles engendrent une diminution de la bande passante disponible pour les contrôles d'accès effectués au moyen des limites,
- l'observation de ces limites est signalée au système de configuration,
- puis les autres limites sont activées.

7. Système de configuration pour la mise en oeuvre d'un procédé selon l'une des revendications 1 à 6.

8. Système de configuration selon la revendication 7,
**caractérisé en ce que**
le système de configuration est conçu pour transmettre les poids de lien déterminés de nouveau à des routeurs.

9. Système de configuration selon la revendication 8,
**caractérisé en ce que**
le système de configuration est conçu pour activer les poids de lien déterminés de nouveau.

10. Système de configuration selon l'une des revendications 7 à 9,
**caractérisé en ce que**
le système de configuration est réalisé sur un serveur de contrôle, dans le système de gestion de réseau, dans un contrôle de services, dans des routeurs ou dans des éléments de contrôle d'accès.
